(19) Europäisches Patentamt
European Patent Office
Office européen des brevets

(11) **EP 4 034 372 B1**

(12) **FASCICULE DE BREVET EUROPEEN**

(45) Date de publication et mention de la délivrance du brevet:
**29.05.2024 Bulletin 2024/22**

(21) Numéro de dépôt: **20790379.0**

(22) Date de dépôt: **25.09.2020**

(51) Classification Internationale des Brevets (IPC):
**B29C 64/40** (2017.01)    **B22F 3/11** (2006.01)
**B22F 10/28** (2021.01)    **B22F 10/47** (2021.01)
**B33Y 10/00** (2015.01)    **B33Y 30/00** (2015.01)
**B22F 3/105** (2006.01)

(52) Classification Coopérative des Brevets (CPC):
(C-Sets disponibles)
**B29C 64/40; B22F 3/1103; B22F 10/28;**
**B22F 10/47; B33Y 10/00; B33Y 30/00;**
B22F 2207/17; B22F 2999/00; Y02P 10/25    (Cont.)

(86) Numéro de dépôt international:
**PCT/FR2020/051674**

(87) Numéro de publication internationale:
**WO 2021/058920 (01.04.2021 Gazette 2021/13)**

(54) **PROCÉDÉ DE FABRICATION ADDITIVE**

ADDITIVES HERSTELLUNGSVERFAHREN

ADDITIVE MANUFACTURING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2019 FR 1910687**

(43) Date de publication de la demande:
**03.08.2022 Bulletin 2022/31**

(73) Titulaire: **AddUp**
**63118 Cébazat (FR)**

(72) Inventeurs:
• **RUIZ, Michel**
**63118 Cébazat (FR)**
• **PICARD, Alexis**
**63118 Cébazat (FR)**
• **AUBRUN, Anthony**
**63118 Cébazat (FR)**

(74) Mandataire: **Barascou, Frédéric**
**Manufacture Française des Pneumatiques Michelin**
**23, place des Carmes-Déchaux**
**DCJ/PI - F35 - Site de Ladoux**
**63040 Clermont-Ferrand Cedex 9 (FR)**

(56) Documents cités:
**EP-A1- 3 278 908    US-A1- 2018 250 745**

(52) Classification Coopérative des Brevets (CPC):
(Cont.)

C-Sets
B22F 2999/00, B22F 10/47, B22F 2207/17

**Description**

**DOMAINE DE L'INVENTION**

La présente invention concerne le domaine de la fabrication additive et plus particulièrement de la fabrication additive de pièces présentant un retour.

**ETAT DE LA TECHNIQUE**

D'une manière connue, la fabrication additive consiste à fabriquer une pièce par superposition successive de couches de poudre qui sont fondues localement.

Plus précisément, la fabrication additive consiste à réaliser des objets tridimensionnels par consolidation de zones sélectionnées sur des strates successives de matériau pulvérulent (poudre métallique, poudre de céramique, etc...). Les zones consolidées correspondent à des sections successives de l'objet tridimensionnel. La consolidation se fait par exemple couche par couche, par une fusion sélective totale ou partielle réalisée avec une source de consolidation (faisceau laser de forte puissance, faisceau d'électrons, etc.).

Cette méthode de fabrication permet de réaliser des structures impossibles à fabriquer avec les méthodes traditionnelles (usinage, moulage).

Notamment, la fabrication additive permet la réalisation de pièces présentant des dépouilles et contre-dépouilles, c'est-à-dire des pièces présentant de formes géométriques convexes contraires, impossibles à réaliser par moulage et très difficiles à réaliser en usinage.

La fabrication additive permet aussi de réaliser des structures en treillis qui ne peuvent être fabriquées autrement.

En sus, cette méthode de fabrication peut s'avérer rapide et relativement peu onéreuse, ce qui permet de l'utiliser dans le cadre d'un prototypage rapide, à la place par exemple de l'usinage à grande vitesse qui demeure complexe.

En fabrication additive, la pièce est réalisée en empilant successivement des couches. En fonction de l'orientation de la géométrie, il est parfois nécessaire de débuter la fabrication en réalisant un support sur lequel la pièce est fabriquée. Dans le cas où la pièce comprend un retour, c'est à dire une partie se situant en porte-à faux du reste de la pièce, il est nécessaire de prévoir un support sous ce retour. Or, la fabrication d'un support est une opération chronophage.

US 2018/0250745 A1 et EP 3 278 908 A1 divulguent une structure de support pour un procédé de fabrication sur lit de poudre et une méthode correspondante pour réaliser cette structure de support.

En conséquence, la présente invention a pour objectif de fournir support de fabrication additive pouvant être réalisé rapidement et à moindre coût.

**EXPOSE DE L'INVENTION**

Selon un premier aspect, l'invention propose un support de fabrication additive comprenant, sur une platine d'une machine de fabrication additive, un empilement réalisé par fabrication additive, comportant :

- d'une part une zone sécable à structure lamellaire comprenant une pluralité de portions solides espacées les unes des autres qui n'appartiennent pas à un même bloc, la zone sécable étant adaptée au maintien, lors de sa fabrication, d'une pièce destinée à être réalisée par fabrication additive, et
- d'autre part, entre la platine et la zone à structure sécable, une zone intermédiaire à structure poreuse monobloc.

La zone intermédiaire peut présenter une porosité comprise entre 0.5 et 5%, préférentiellement entre 1 et 2%.

Le support peut comprendre en outre une zone d'ancrage, adaptée pour être accrochée sur une platine de fabrication. La zone d'ancrage peut présenter une densité supérieure à la densité de la zone intermédiaire poreuse et/ou de la zone sécable.

La zone sécable peut présenter une épaisseur inférieure à 15% d'une épaisseur totale du support.

La zone intermédiaire peut présenter une épaisseur comprise entre 60% et 95% d'une épaisseur totale du support.

La zone d'ancrage peut présenter une épaisseur inférieure ou égale à 30% d'une épaisseur totale du support.

Selon un deuxième aspect l'invention concerne un procédé de fabrication additive d'une pièce par consolidation de zones sélectionnées sur des couches successives d'un matériau pulvérulent, par une source de consolidation, dans lequel on réalise préalablement un support de fabrication additive par fabrication additive sur une platine d'une machine de fabrication additive d'un empilement comportant :

- d'une part une zone sécable à structure lamellaire comprenant une pluralité de portions solides espacées les unes des autres qui n'appartiennent pas à un même bloc, la zone sécable étant adaptée au maintien, lors de sa fabrication, d'une pièce destinée à être réalisée par fabrication additive, et
- d'autre part, entre la platine et la zone à structure sécable, une zone intermédiaire à structure poreuse monobloc.

La zone sécable est une zone à structure lamellaire réalisée avec une densité d'énergie comprise entre 10% et 25%, préférentiellement 14 et 20 %, de la densité d'énergie volumique lors de la fabrication de la pièce.

L'espace intervecteurs lors de la fabrication de la zone sécable peut être compris entre 300 et 500% de l'espace intervecteurs lors de la fabrication de la pièce.

La zone intermédiaire poreuse peut être réalisée avec une densité d'énergie volumique comprise entre 15% et 60%, préférentiellement 22 et 50%, de la densité d'énergie volumique de la densité d'énergie volumique lors de la fabrication de pièce la pièce.

L'espace intervecteurs lors de la fabrication de la zone poreuse peut être compris entre 130 et 190% de l'espace intervecteurs lors de la fabrication de la pièce.

La densité d'énergie volumique lors de la fabrication de la zone d'ancrage peut être comprise entre 90% et 110% de la densité d'énergie volumique utilisée lors de la fabrication de la pièce.

## DESCRIPTION DES FIGURES

D'autres caractéristiques, buts et avantages de l'invention ressortiront de la description qui suit, qui est purement illustrative et non limitative, et qui doit être lue en regard du dessin annexé sur lequel :

La Figure 1 est une représentation en coupe d'un support selon l'invention.
La Figure 2 est une représentation schématique d'un parcours d'une source de consolidation lors de la fabrication d'une zone sécable selon un premier exemple.
La Figure 3 est une représentation schématique d'un parcours d'une source de consolidation lors de la fabrication d'une zone sécable selon un deuxième exemple.
La Figure 4 est une représentation schématique d'un parcours d'une source de consolidation lors de la fabrication d'une zone sécable selon un troisième exemple.
La Figure 5 est une représentation schématique d'un parcours d'une source de consolidation lors de la fabrication d'une zone sécable selon un quatrième exemple.

## DESCRIPTION DETAILLEE DE L'INVENTION

Selon un premier aspect, l'invention concerne un support 1 de fabrication additive comprenant un empilement de plusieurs zones réalisées par fabrication additive, dont au moins une zone présentant une structure sécable et au moins une zone présentant une structure poreuse. Typiquement, selon le mode de réalisation ici présenté le support 1 comprend trois structures distinctes : une zone sécable 10, une zone intermédiaire 20 fabriquée avec une faible densité d'énergie et une zone d'ancrage 30.

L'empilement qui constitue le support 1 est réalisé par fabrication additive par dépôt de lits de poudre successifs à partir d'une platine de machine de fabrication additive et consolidation (frittage et/ou fusion) de zones sélectionnées sur les couches de matériau pulvérulent successivement déposées.

Sur l'empilement, les différentes zones qui se succèdent selon l'axe de fabrication (vertical) sont des strates de matière consolidées qui s'étendent transversalement par rapport audit axe et qui présentent, d'une zone à l'autre, des structures différentes.

Selon le mode de réalisation ici présenté, le support 1 comprend successivement, en partant de la platine d'une machine de fabrication additive : la zone d'ancrage 30, puis la zone poreuse 20, puis la zone sécable 10. En variante, le support 1 peut comprendre uniquement, en partant de la platine d'une machine de fabrication additive : la zone 20 poreuse à faible densité d'énergie et la zone sécable 10.

*Zone sécable 10*

La zone sécable 10 présente une structure :

- d'une part qui lui permet d'assurer la fixation pièce 100 pendant sa fabrication selon un procédé de fabrication additive par dépôt de lit de poudre et

- d'autre part qui lui permet d'assurer la séparation de la pièce 100 par rapport au support 1 et à la platine de la machine de fabrication additive.

Selon une disposition avantageuse, la zone sécable 10 présente une structure lamellaire (d'un point de vue macroscopique)

Par structure lamellaire, il est entendu une structure composée d'une pluralité de lamelles sensiblement parallèles les unes aux autres.

La structure lamellaire de ladite zone 10 est aérée et présente une grande surface spécifique. Elle présente des interstices entre les lamelles, ce qui permet à la structure de présenter une densité réduite. En d'autres termes, la zone sécable 10 présente une structure semblable à une mousse, c'est-à-dire une structure comprenant des cavités (i.e. des bulles) séparées par un amas rigide.

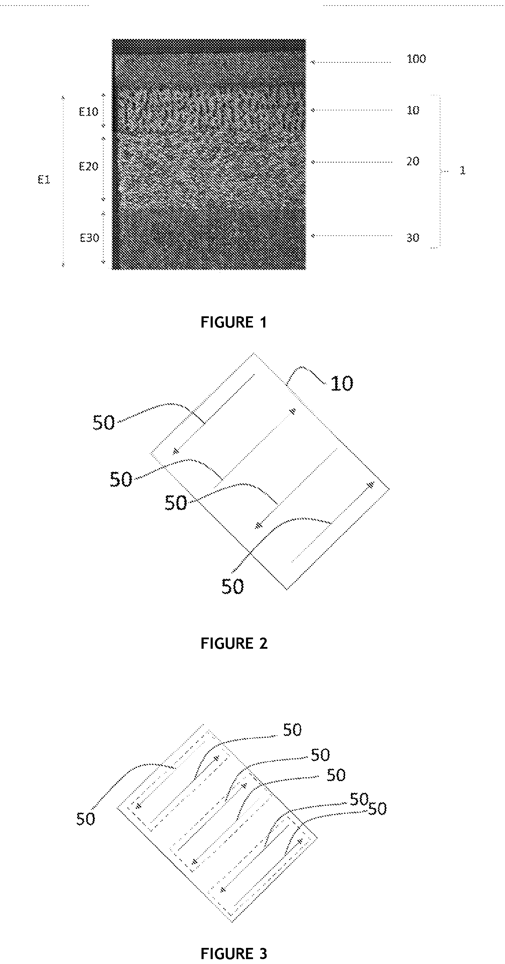

Plus précisément, la structure lamellaire comprend une pluralité de portions solides espacées les unes des autres. En d'autres termes, les portions solides sont une définition de la structure lamellaire. Ces portions solides correspondent à des conglomérats discrets de poudre fondue. En d'autres termes, lors de la fabrication de la zone sécable, une source de consolidation d'une machine de fabrication additive va faire fondre de manière discontinue la poudre le long de son trajet (tel que représenté sur les figures 2 à 5). La zone sécable comprend donc une multitude de portions solides qui n'appartiennent pas à un même bloc, par opposition à une pièce poreuse réalisée monobloc.

Selon une disposition particulière, les portions solides de la zone sécable 10 présentent une section polygonale et/ou une section curviligne. Typiquement, les portions solides peuvent être des lamelles triangulaires ou rectangulaires, ou circulaires. En sus, ces lamelles peuvent être droites ou en forme de vagues.

Chaque portion solide de la zone sécable 10 peut présenter une aire inférieure à 10%, et préférentiellement comprise entre 1% et 5%, d'une aire de la zone sécable 10. Cette disposition permet de garantir un maintien optimal de la pièce lors de sa fabrication et une sécabilité optimale lors de l'extraction de la pièce.

Selon une disposition particulière, une somme des aires des portions solides peut être comprise entre 30% et 75% de l'aire de la zone sécable 10.

L'interstice entre lamelle est le résultat d'une augmentation entre 300 et 500% de l'écart vecteur entre deux balayages du faisceau de la source d'énergie par rapport à celui utilisé pour réaliser la structure de référence qui est la zone d'ancrage. Cette disposition ne permet pas un recouvrement entre les bains de fusion/frittage. Le résultat obtenu est par exemple sous forme de lamelles indépendantes.

Cette disposition permet à la zone sécable 10 de présenter une structure suffisamment résistante aux efforts générés lors de la fabrication, tout en présentant une fragilité liée à sa structure fine permettant de séparer aisément la pièce 100 manuellement et de faciliter ainsi la séparation entre la pièce 100 et la zone poreuse 20.

La zone sécable 10 présente par exemple une épaisseur $E_{10}$ inférieure à 15% d'une épaisseur totale $E_1$ du support 1. D'une manière préférentielle, l'épaisseur $E_{10}$ est inférieure ou égale à 10% de l'épaisseur totale $E_1$. D'une manière particulièrement préférentielle, l'épaisseur $E_{10}$ est comprise entre 5% et 10% de l'épaisseur totale $E_1$.

*Zone intermédiaire 20*

La zone 20 est réalisée en utilisant une densité d'énergie volumique réduite lors de la fusion ou du frittage par les balayages du faisceau de la source d'énergie de la machine de fabrication additive.

Une conséquence de cette densité d'énergie réduite est que la structure de la zone 20 est poreuse.

Cette structure poreuse 20 permet une résistante suffisante pour supporter les efforts liés à la fabrication.

Typiquement, la zone 20 présente une structure poreuse dont la porosité est comprise entre 0.5 et 5%, préférentiellement entre 1 et 2%. Il est rappelé que le pourcentage de porosité d'une structure est le rapport entre le volume des vides et le volume total de la structure poreuse.

Selon une disposition particulière, la zone intermédiaire 20 présente une épaisseur $E_{20}$ comprise entre 60% et 95% de l'épaisseur totale $E_1$ du support 1.

D'une manière préférentielle l'épaisseur $E_{20}$ est comprise entre 70% et 90% de l'épaisseur totale $E_1$ du support 1.

*Zone d'ancrage 30*

Selon le mode de réalisation ici présenté, le support 1 présente une zone d'ancrage 30. Il s'agit d'une disposition avantageuse, selon d'autres modes de réalisation, le support 1 pourrait présenter uniquement une zone sécable 10 et une zone intermédiaire 20.

La zone d'ancrage 30 est destinée à assurer une bonne accroche du support 1 sur une platine de fabrication d'une machine de fabrication additive.

Préférentiellement, la zone d'ancrage 30 est réalisée avec une densité d'énergie volumique sensiblement similaire à celle utilisée pour réaliser la pièce 100. Cette disposition permet à la zone d'ancrage 30 d'être particulièrement résistante et d'accrocher sur une platine d'une machine de fabrication additive.

Selon une disposition particulière, la zone d'ancrage 30 présente une épaisseur E30 inférieure à 30% d'une épaisseur totale E1 du support 1. D'une manière préférentielle l'épaisseur E30 est inférieure ou égale à 20% de l'épaisseur totale E1.

*Procédé de fabrication*

Selon un deuxième aspect, l'invention propose un procédé de fabrication additive d'une pièce 100.

Par fabrication additive, il est, par exemple, entendu un procédé de fabrication par dépôt de lit de poudre dans lequel on superpose des couches de poudre. Puis, chaque couche de poudre est fondue localement en fonction du plan de la pièce 100 à fabriquer (d'une manière classique la fusion peut être opérée par un faisceau d'électrons ou un laser). La pièce 100 est ainsi fabriquée par incrémentation, c'est-à-dire une superposition, de différentes couches.

Selon une définition admise, la fabrication additive par dépôt de lit de poudre consiste à réaliser des objets tridimensionnels par consolidation de zones sélectionnées sur des strates successives de matériau pulvérulent (poudre métallique, poudre de céramique, etc.). Les zones consolidées correspondent à des sections successives de l'objet tridimensionnel. La consolidation se fait par exemple couche par couche, par une fusion sélective totale ou partielle réalisée avec une source de consolidation (faisceau laser de forte puissance, faisceau d'électrons, etc.).

Selon une disposition particulièrement avantageuse, le procédé débute par la fabrication du support 1 et éventuellement de la pièce 100

Les zones empilées du support 1 sont réalisées dans l'ordre suivant : zone d'ancrage 30 (le cas échéant), puis zone intermédiaire 20 et zone sécable 10.

Selon une disposition technique particulièrement avantageuse, l'étape de consolidation comprend un apport énergétique correspondant à une densité d'énergie volumique déterminée comme suit :

$$Densité\ d'énergie\ volumique\ (J.cm^{-3}) = \frac{Puissance\ (W)}{Vitesse\ (cm.s^{-1}).\ Espace\ intervecteurs\ (cm).\ Epaisseur\ de\ couche\ (cm)}$$

Avec, la vitesse correspondant à la vitesse de déplacement de la source de consolidation et l'espace intervecteurs correspondant à l'écart entre deux vecteurs du trajet du faisceau de la source de consolidation.

Il est remarquable que la variation de la densité d'énergie volumique permet de faire varier la structure de la matière mise en forme par fabrication additive.

En d'autres termes, en modifiant la densité d'énergie volumique et notamment, en modifiant l'écart vecteur il est possible de créer une structure dense, poreuse ou lamellaire. Typiquement, mais non limitativement, l'espace intervecteurs pour la réalisation de la zone d'ancrage est compris 30 et 100 $\mu$m. Afin de créer la structure poreuse ce paramètre peut être augmenté entre 130 et 200%. Pour créer la structure lamellaire ce même paramètre peut-être augmenté entre 300 et 500%.

D'une manière préférentielle, dans une optique de gain de temps de production, la densité d'énergie volumique est modifiée en faisant varier l'espace intervecteurs. En effet, le paramètre d'espace intervecteurs correspond à l'écart entre deux balayages successifs, et peut être aisément augmenté sans préjudice sur la durée de production de la pièce 100

Il est néanmoins possible de faire varier la densité d'énergie volumique en modifiant les autres paramètres que sont la puissance de la source, la vitesse de déplacement de la source et l'épaisseur de couche de la poudre de fabrication additive.

D'une manière particulièrement avantageuse, en considérant comme référence, la densité d'énergie volumique nécessaire pour fabriquer la pièce, la densité d'énergie volumique d'énergie nécessaire pour fabriquer la zone sécable 10 est comprise entre 10% de la densité d'énergie volumique nécessaire pour fabriquer la pièce et 25% de la densité d'énergie volumique nécessaire pour fabriquer la pièce 100.

D'une manière préférentielle, la densité d'énergie volumique nécessaire pour fabriquer la zone sécable 10 est comprise entre 14% de la densité d'énergie volumique nécessaire pour fabriquer la pièce et 20% de la densité d'énergie volumique nécessaire pour fabriquer la pièce 1.

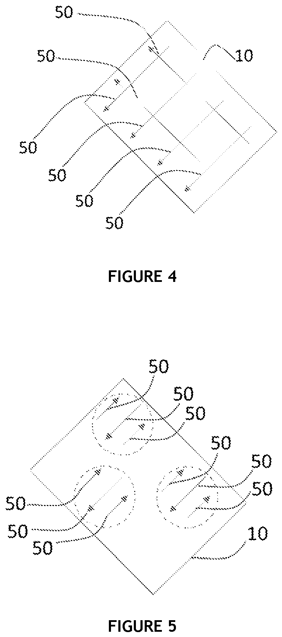

En outre, tel que représenté sur les figures 2 à 5, pour fabriquer les portions solides qui constituent la structure lamellaire, la source de consolidation émet par intermittence un faisceau énergétique. Ainsi, en référence aux figures 2 à 5, les vecteurs 50 représentent les trajets sur lesquels la source de consolidation émet un faisceau (et donc fait fondre la poudre). La figure 4 représente un empilement de lamelles croisées qui sont orientées orthogonalement. Ainsi les trajets des vecteurs 50 sont sécants dans une représentation plane.

Selon une disposition avantageuse, la densité d'énergie volumique nécessaire pour fabriquer la zone intermédiaire 20 peut être comprise entre 15% de la densité d'énergie volumique nécessaire pour fabriquer la pièce et 60% de la densité d'énergie volumique nécessaire pour fabriquer la pièce 100.

D'une manière préférentielle, la densité d'énergie volumique nécessaire pour fabriquer la zone intermédiaire 20 peut être comprise entre 22% de la densité d'énergie volumique nécessaire pour fabriquer la pièce et 50% de la densité d'énergie volumique nécessaire pour fabriquer la pièce 100.

Selon une disposition avantageuse, la densité d'énergie volumique nécessaire pour fabriquer la zone d'ancrage 30 est sensiblement égale à la densité d'énergie volumique nécessaire pour fabriquer la pièce 100 (à plus ou moins 10% près).

**Revendications**

1. Support (1) de fabrication additive comprenant, sur une platine d'une machine de fabrication additive, un empilement réalisé par fabrication additive, comportant :

   - d'une part une zone sécable (10) à structure lamellaire comprenant une pluralité de portions solides espacées les unes des autres qui n'appartiennent pas à un même bloc, la zone sécable (10) étant adaptée au maintien, lors de sa fabrication, d'une pièce (100) destinée à être réalisée par fabrication additive, et
   - d'autre part, entre la platine et la zone à structure sécable (10), une zone intermédiaire à structure poreuse (20) monobloc.

2. Support (1) de fabrication additive selon la revendication 1 dans lequel les portions solides de la zone sécable (10) présentent une section polygonale et/ou une section curviligne.

3. Support (1) de fabrication additive selon l'une quelconque des revendications 1 ou 2, dans lequel chaque portion solide de la zone sécable (10) présente une aire inférieure à 10%, et préférentiellement comprise entre 1% et 5%, d'une aire de la zone sécable (10).

4. Support (1) de fabrication selon la revendication 3, dans lequel une somme des aires des portions solides est comprise entre 30% et 75% de l'aire de la zone sécable (10).

5. Support (1) de fabrication additive selon l'une quelconque des revendications précédentes dans lequel la zone intermédiaire présente une porosité comprise entre 0.5 et 5%, préférentiellement entre 1 et 2%.

6. Support (1) de fabrication additive selon l'une quelconque des revendications précédentes comprenant en outre une zone d'ancrage (30), adaptée pour être accrochée sur une platine de fabrication, la zone d'ancrage (30) présentant une densité supérieure à la densité de la zone intermédiaire poreuse (20) et/ou de la zone sécable (10).

7. Support (1) de fabrication additive selon l'une quelconque des revendications précédentes, dans lequel la zone sécable présente une épaisseur inférieure à 15% d'une épaisseur totale du support.

8. Support (1) de fabrication additive selon l'une quelconque des revendications précédentes, dans lequel la zone intermédiaire (20) présente une épaisseur comprise entre 60% et 95% d'une épaisseur totale du support (1).

9. Support (1) de fabrication additive selon l'une quelconque des revendications précédentes en combinaison avec la revendication 3, dans lequel la zone d'ancrage (30) présente une épaisseur inférieure ou égale à 30% d'une épaisseur totale du support.

10. Procédé de fabrication additive d'une pièce (100) par consolidation de zones sélectionnées sur des couches successives d'un matériau pulvérulent, par une source de consolidation, dans lequel on réalise préalablement un support (1) de fabrication additive par fabrication additive sur une platine d'une machine de fabrication additive d'un empilement comportant :

    - d'une part une zone sécable à structure lamellaire comprenant une pluralité de portions solides espacées les unes des autres qui n'appartiennent pas à un même bloc, la zone sécable étant adaptée au maintien, lors de sa fabrication, d'une pièce (100) destinée à être réalisée par fabrication additive, réalisée avec une densité d'énergie comprise entre 10% et 25%, préférentiellement 14 et 20 %, de la densité d'énergie volumique lors de la fabrication de la pièce (100), et
    - d'autre part, entre la platine et la zone à structure sécable, une zone intermédiaire à structure poreuse monobloc.

**11.** Procédé selon la revendication 10, dans lequel, un espace intervecteurs correspondant à un écart entre deux vecteurs du trajet d'un faisceau de la source de consolidation, l'espace intervecteurs lors de la fabrication de la zone sécable est compris entre 300 et 500% de l'espace intervecteurs lors de la fabrication de la pièce.

**12.** Procédé selon l'une quelconque des revendications 10 et 11, dans lequel la zone intermédiaire poreuse (20) est réalisée avec une densité d'énergie volumique comprise entre 15% et 60%, préférentiellement 22 et 50%, de la densité d'énergie volumique de la densité d'énergie volumique lors de la fabrication de pièce la pièce (100).

**13.** Procédé selon la revendication 12, dans lequel l'espace intervecteurs lors de la fabrication de la zone poreuse est compris entre 130 et 190% de l'espace intervecteurs lors de la fabrication de la pièce.

**14.** Procédé selon l'une quelconque des revendications 10 à 13, dans lequel la densité d'énergie volumique lors de la fabrication de la zone d'ancrage (30) est comprise entre 90% et 110% de la densité d'énergie volumique utilisée lors de la fabrication de la pièce (100).

**Patentansprüche**

**1.** Stützstruktur (1) für die additive Fertigung, welche auf einer Platte einer Maschine zur additiven Fertigung einen durch additive Fertigung hergestellten Stapel umfasst, welcher aufweist:

- einerseits einen trennbaren Bereich (10) mit lamellarer Struktur, der mehrere voneinander beabstandete massive Abschnitte umfasst, die nicht zum gleichen Block gehören, wobei der trennbare Bereich (10) zum Halten eines Teils (100), das durch additive Fertigung hergestellt werden soll, während dessen Fertigung eingerichtet ist, und
- andererseits zwischen der Platte und dem Bereich mit trennbarer Struktur (10) einen einstückigen Zwischenbereich mit poröser Struktur (20).

**2.** Stützstruktur (1) für die additive Fertigung nach Anspruch 1, wobei die massiven Abschnitte des trennbaren Bereichs (10) einen polygonalen Querschnitt und/oder einen gekrümmten Querschnitt aufweisen.

**3.** Stützstruktur (1) für die additive Fertigung nach einem der Ansprüche 1 oder 2, wobei jeder massive Abschnitt des trennbaren Bereichs (10) eine Fläche aufweist, die weniger als 10 % und vorzugsweise zwischen 1 % und 5 % einer Fläche des trennbaren Bereichs (10) beträgt.

**4.** Stützstruktur (1) für die additive Fertigung nach Anspruch 3, wobei eine Summe der Flächen der massiven Abschnitte zwischen 30 und 75 % der Fläche des trennbaren Bereichs (10) beträgt.

**5.** Stützstruktur (1) für die additive Fertigung nach einem der vorhergehenden Ansprüche, wobei der Zwischenbereich eine Porosität zwischen 0,5 und 5 %, vorzugsweise zwischen 1 und 2 % aufweist.

**6.** Stützstruktur (1) für die additive Fertigung nach einem der vorhergehenden Ansprüche, welche außerdem einen Verankerungsbereich (30) umfasst, der dazu eingerichtet ist, auf einer Fertigungsplatte angehängt zu werden, wobei der Verankerungsbereich (30) eine Dichte aufweist, die größer als die Dichte des porösen Zwischenbereichs (20) und/oder des trennbaren Bereichs (10) ist.

**7.** Stützstruktur (1) für die additive Fertigung nach einem der vorhergehenden Ansprüche, wobei der trennbare Bereich eine Dicke aufweist, die kleiner als 15 % einer Gesamtdicke der Stützstruktur ist.

**8.** Stützstruktur (1) für die additive Fertigung nach einem der vorhergehenden Ansprüche, wobei der Zwischenbereich (20) eine Dicke aufweist, die zwischen 60 % und 95 % einer Gesamtdicke der Stützstruktur (1) beträgt.

**9.** Stützstruktur (1) für die additive Fertigung nach einem der vorhergehenden Ansprüche in Kombination mit Anspruch 3, wobei der Verankerungsbereich (30) eine Dicke aufweist, die kleiner oder gleich 30 % einer Gesamtdicke der Stützstruktur ist.

**10.** Verfahren zur additiven Fertigung eines Teils (100) durch Verfestigung ausgewählter Bereiche auf aufeinander folgenden Schichten eines pulverförmigen Materials durch eine Verfestigungsquelle, wobei zuvor eine Stützstruktur (1) für die additive Fertigung durch additive Fertigung, auf einer Platte einer Maschine zur additiven Fertigung, eines Stapels hergestellt wird, welcher aufweist:

- einerseits einen trennbaren Bereich mit lamellarer Struktur, der mehrere voneinander beabstandete massive Abschnitte umfasst, die nicht zum gleichen Block gehören, wobei der trennbare Bereich zum Halten eines Teils (100), das durch additive Fertigung hergestellt werden soll, während dessen Fertigung eingerichtet ist und mit einer Energiedichte hergestellt wird, die zwischen 10 % und 25 %, vorzugsweise zwischen 14 und 20 %, der Volumenenergiedichte bei der Fertigung des Teils (100) beträgt, und
- andererseits zwischen der Platte und dem Bereich mit trennbarer Struktur einen einstückigen Zwischenbereich mit poröser Struktur.

11. Verfahren nach Anspruch 10, wobei, wenn ein Vektorzwischenraum einem Abstand zwischen zwei Vektoren der Trajektorie eines Strahls der Verfestigungsquelle entspricht, der Vektorzwischenraum bei der Fertigung des trennbaren Bereichs zwischen 300 und 500 % des Vektorzwischenraumes bei der Fertigung des Teils beträgt.

12. Verfahren nach einem der Ansprüche 10 und 11, wobei der poröse Zwischenbereich (20) mit eine Volumenenergiedichte hergestellt wird, die zwischen 15 % und 60 %, vorzugsweise 22 und 50 %, der Volumenenergiedichte bei der Fertigung des Teils (100) beträgt.

13. Verfahren nach Anspruch 12, wobei der Vektorzwischenraum bei der Fertigung des porösen Bereichs zwischen 130 und 190 % des Vektorzwischenraumes bei der Fertigung des Teils beträgt.

14. Verfahren nach einem der Ansprüche 10 bis 13, wobei die Volumenenergiedichte bei der Fertigung des Verankerungsbereichs (30) zwischen 90 % und 110 % der Volumenenergiedichte beträgt, die bei der Fertigung des Teils (100) verwendet wird.


**Claims**

1. Additive manufacturing support (1) comprising, on a plate of an additive manufacturing machine, a stack produced by additive manufacturing, having:

- on the one hand, a breakable zone (10) with a lamellar structure comprising a plurality of solid portions spaced apart from one another which does not belong to the same block, the breakable zone (10) being suitable for holding, during its manufacture, a part (100) intended to be produced by additive manufacturing, and
- on the other hand, between the plate and the zone with a breakable structure (10), an intermediate zone with a porous structure (20) in one piece.

2. Additive manufacturing support (1) according to Claim 1, wherein the solid portions of the breakable zone (10) have a polygonal section and/or a curvilinear section.

3. Additive manufacturing support (1) according to either one of Claims 1 and 2, wherein each solid portion of the breakable zone (10) has an area of less than 10%, and preferentially between 1% and 5%, of an area of the breakable zone (10).

4. Manufacturing support (1) according to Claim 3, wherein a sum of the areas of the solid portions is between 30% and 75% of the area of the breakable zone (10).

5. Additive manufacturing support (1) according to any one of the preceding claims, wherein the intermediate zone has a porosity of between 0.5 and 5%, preferentially between 1 and 2%.

6. Additive manufacturing support (1) according to any one of the preceding claims, further comprising an anchoring zone (30), which is suitable for being attached to a manufacturing plate, the anchoring zone (30) having a density greater than the density of the porous intermediate zone (20) and/or of the breakable zone (10).

7. Additive manufacturing support (1) according to any one of the preceding claims, wherein the breakable zone has a thickness less than 15% of a total thickness of the support.

8. Additive manufacturing support (1) according to any one of the preceding claims, wherein the intermediate zone (20) has a thickness of between 60% and 95% of a total thickness of the support (1).

9. Additive manufacturing support (1) according to any one of the preceding claims in combination with Claim 3, wherein the anchoring zone (30) has a thickness less than or equal to 30% of a total thickness of the support.

10. Method for the additive manufacturing of a part (100) by consolidation of selected zones on successive layers of a pulverulent material, by a consolidation source, wherein an additive manufacturing support (1) is produced beforehand by additive manufacturing, on a plate of an additive manufacturing machine, of a stack comprising:

- on the one hand, a breakable zone with a lamellar structure comprising a plurality of solid portions spaced apart from one another which does not belong to the same block, the breakable zone being suitable for holding, during its manufacture, a part (100) intended to be produced by additive manufacturing, produced with an energy density of between 10% and 25%, preferentially 14 and 20%, of the energy density per unit volume during the manufacture of the part (100), and
- on the other hand, between the plate and the zone with a breakable structure, an intermediate zone with a porous structure in one piece.

11. Method according to Claim 10, wherein, a space between the vectors corresponding to the distance between two vectors of the path of the beam of the consolidation source, the space between the vectors during the manufacture of the breakable zone is between 300 and 500% of the space between the vectors during the manufacture of the part.

12. Method according to either one of Claims 10 and 11, wherein the porous intermediate zone (20) is produced with an energy density per unit volume of between 15% and 60%, preferentially 22 and 50%, of the energy density per unit volume of the energy density per unit volume during the manufacture of the part (100).

13. Method according to Claim 12, wherein the space between the vectors during the manufacture of the porous zone is between 130 and 190% of the space between the vectors during the manufacture of the part.

14. Method according to any one of Claims 10 to 13, wherein the energy density per unit volume during the manufacture of the anchoring zone (30) is between 90% and 110% of the energy density per unit volume used during the manufacture of the part (100).

**FIGURE 1**

**FIGURE 2**

**FIGURE 3**

**FIGURE 4**

**FIGURE 5**

**EP 4 034 372 B1**

## RÉFÉRENCES CITÉES DANS LA DESCRIPTION

**Documents brevets cités dans la description**

- US 20180250745 A1

- EP 3278908 A1